# EUROPÄISCHE PATENTSCHRIFT

(11) **EP 0 415 972 B1**
(45) Veröffentlichungstag und Bekanntmachung des Hinweises auf die Patenterteilung: **10.03.1993**
(21) Anmeldenummer: 89905693.1
(22) Anmeldetag: 23.05.1989
(51) Int. Cl.: B60L 5/20

(54) **SCHLEIFLEISTE FÜR STROMABNEHMER MIT BRUCHDETEKTOREINRICHTUNG**
SLIDING STRIP FOR COLLECTOR WITH RUPTURE DETECTION DEVICE
GLISSIERE POUR COLLECTEUR AVEC DISPOSITIF DE DETECTION DE RUPTURE

(30) Priorität: 25.05.1988 DE 3817743
(43) Veröffentlichungstag der Anmeldung: 13.03.1991
(73) Patentinhaber: HOFFMANN & CO. ELEKTROKOHLE GESELLSCHAFT M.B.H., A-4823 Steeg (AT)
(72) Erfinder: HOFFMANN, Peter, A-4823 Steeg (AT); HÖLL, Johann, A-4830 Hallstatt (AT); GRABNER, Herbert, A-4820 Bad Ischl (AT); REISER, Klaus, A-4820 Bad Ischl (AT)
(74) Vertreter: Glawe, Delfs, Moll & Partner
(86) Internationale Anmeldenummer: EP8900563
(87) Internationale Veröffentlichungsnummer: WO8911408

(56) Entgegenhaltungen:
- EP-A- 78 159
- DE-A- 2 829 396
- DE-U- 8 716 985
- DE-U- 8 803 377
- GB-A- 1 374 972

## Beschreibung

Die Erfindung betrifft eine Schleifleiste für Stromabnehmer mit einem Träger, einer darauf angebrachten Kohleleiste und einer Bruchwächtereinrichtung zum Detektieren von Bruch oder Abnützung der Kohleleiste, bestehend aus einem sich in der Kohleleiste in deren Längsrichtung erstreckenden luftdichten Druckkanal, einer Einrichtung zum Erzeugen eines erhöhten Luft- oder Gasdruckes in den Druckkanal und einem einen Druckabfall signalisierenden Detektor.

Beim modernen Stromabnehmern ist es wichtig, daß sie möglichst schnell außer Betrieb genommen werden, wenn die Kohleschleifleiste durch Abnützung oder Bruch unbrauchbar geworden ist. Es ist deshalb aus GB-A-1 374 972 und EP-A-0 078 159 eine Schleifleiste der gegebenen Art bekannt, bei der in den Druckkanal ein Schlauch eingelegt ist. Der Druckkanal kann auch aus einer Bohrung im Innern des Kohleschleifstücks bestehen, wobei die Bohrungswände mit einem Kleber aus Kautschuk, synthetischem Kunstharz und Lösungsmittel beschichtet sind. Eine Schleifleiste ähnlicher Art ist auch aus US-A-4 578 546 bekannt. Wenn das Kohleschleifstück soweit abgenutzt ist, daß der Gummischlauch oder die Gummibeschichtung des Druckkanals ihre äußere Abstützung verliert und aufreißt, tritt ein Druckverlust im Druckkanal ein, der detektiert werden und z.B. das Absinken des Stromabnehmers vom Leitungsdraht steuern kann.

Die bekannten Schleifleisten haben den Nachteil, daß sie auf Risse im Kohlematerial nicht empfindlich ansprechen. Außerdem bedeutet das Einbringen eines Gummischlauches oder einer Gummibeschichtung in den Druckkanal einen zusätzlichen, die Herstellung verteuernden Arbeitsschritt.

Aus DE-U-88 03 377 ist eine Kohleschleifleiste für Stromabnehmer bekannt, deren Bruckwächtereinrichtung keinen gasgefüllten Druckkanal, sondern einen in einer Ausnehmung des Kohleschleifstücks angeordneten elektrischen Leiter aufweist, der an einen Signalgeber angeschlossen ist. Eine solche Bruchwächtereinrichtung spricht nur dann an, wenn das Kohlematerial so weit abgenutzt ist, daß der Fahrdraht den eingelegten Leiter kontaktiert. Sie ist z.B. nicht geeignet, Brüche oder Risse in der noch nicht vollständig abgenutzten Kohleleiste zu detektieren.

Der Erfindung liegt die Aufgabe zugrunde, eine Kohleschleifleiste der genannten Art so zu verbessern, daß sowohl Abnutzung als auch ein Bruch der Kohle zuverlässig und ohne Verzögerung detektiert werden können.

Die Lösung der Aufgabe ist im Anspruch 1 angegeben. Die Unteransprüche beziehen sich auf die vorteilhafte weitere Ausgestaltung der Schleifleiste sowie auf ein Verfahren zur Herstellung einer Kohleleiste für die erfindungsgemäße Schleifleiste.

Da erfindungsgemäß der Druckkanal nicht durch einen Schlauch oder eine Beschichtung aus Gummi oder dergleichen, sondern von einer galvanischen Beschichtung begrenzt wird, ist bei der Herstellung kein gesonderter Arbeitsschritt erforderlich, da eine derartige Beschichtung ohnehin auf die Unterseite der Kohleleiste aufzubringen ist, um einen elektrischen Anschluß der Kohleleiste mit dem Träger der Schleifleiste herzustellen. Andererseits ist die galvanische Beschichtung wesentlich weniger zäh und reißfest als ein Schlauch oder eine Beschichtung aus Gummi oder dergleichen. Deshalb wird der Druckkanal bei einem Bruch der Kohle und sogar schon beim Auftreten eines leichten Risses in der Kohle undicht, und ebenso bei Abnutzung oder falls die Kohleleiste durch einen Schlag aus ihrer Verbindung mit dem Träger herausgerissen wird. In allen Fällen resultiert sehr zuverlässig ein schneller Druckverlust, der dann in bekannter Weise zum Auslösen eines Warnsignals und/oder zum selbsttägigen Absenken des Stromabnehmers herangezogen werden kann. Die Ansprechempfindlichkeit kann durch entsprechende Bemessung der Metallbeschichtung an den Wandungen der Nut gezielt beeinflußt werden.

Ausführungsformen der Erfindung werden anhand der Zeichnungen erläutert. Es zeigt:
Fig. 1 einen schematischen Querschnitt durch eine erfindungsgemäße Schleifleiste,
Fig. 2 den Endbereich der erfindungsgemäßen Schleifleiste im Längsschnitt mit angeschlossenem Bruchdetektor,
Fig. 3 den Endbereich einer erfindungsgemäßen Schleifleiste gemäß einer anderen Ausführungsform der Erfindung.

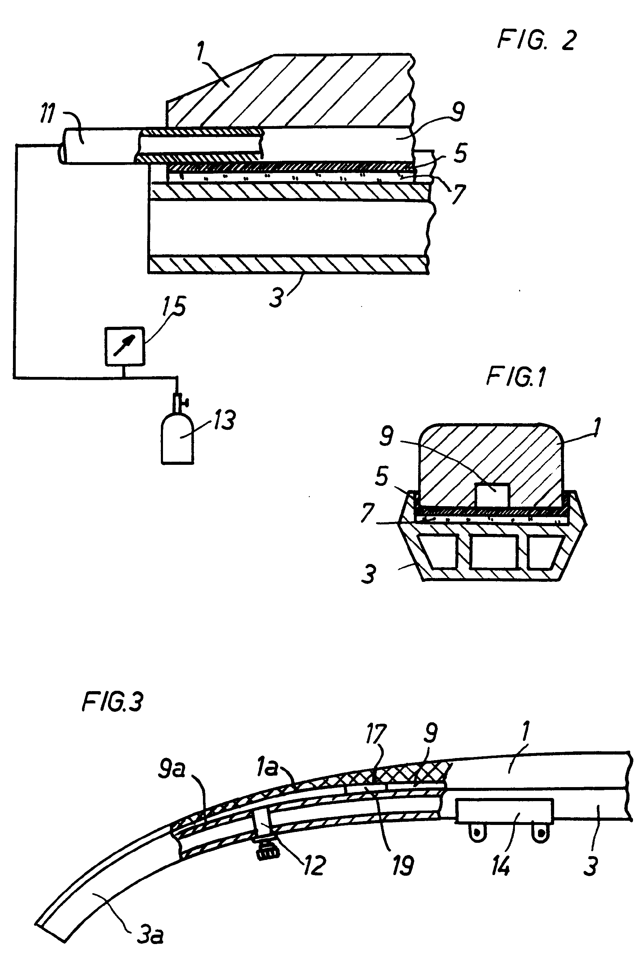

Gemäß Fig. 1 und 2 besteht die Schleifleiste aus der Kohleleiste 1 und dem Träger 3, der für die erforderliche mechanische Festigkeit notwendig ist und bei bisher üblichen Schleifleisten auch der Stromableitung dient. Die Unterseite der Kohleleiste 1 ist mit einer galvanisch aufgebrachten Kupferschicht 5 versehen und mittels eines Klebers 7 mit dem Träger 3 verklebt. Die Kupferschicht 5 und Klebschicht 7 sind in Fig. 1 und 2 übertrieben dick dargestellt.

In der Unterseite der Kohleleiste 1 ist durch Fräsen oder Einpressen eine Nut 9 ausgebildet, die von der Kupferschicht 5 überbrückt wird, so daß die Nut 9 einen an drei Seiten von der Kohle und an der vierten Seite von der Kupferschicht 5 luftdicht umschlossenen Druckkanal bildet. Die von der Kohle gebildeten Wandungen der Nut können zusätzlich luftdicht beschichtet sein, z.B. durch eine dünne Lackschicht oder eine pyrolytisch aufgebrachte Kohleschicht.

Gemäß Fig. 2 ist an einem Ende der Kohleleiste 1 an den Drukkanal 9 z.B. mittels eines eingeklebten Schlauches 11 eine Druckleitung angeschlossen, die von einer Druckluftquelle, z.B. einer Preßluftflasche 13 mit erhöhtem Druck versorgt wird, und der Druck im Druckkanal 9 kann mit einem Drucksensor 15 überwacht werden. Am anderen (in Fig. 2 nicht dargestellten) Ende der Kohleleiste 1 ist der Druckkanal 9 selbstverständlich in geeigneter Weise verschlossen.

Bei Abnützung, Beschädigung oder einem Bruch des Materials der Kohleleiste 1 ergibt sich eine Undichtigkeit des Druckkanals 9, die einen Druckabfall erzeugt, der vom Drucksensor 15 gemessen wird. In an sich bekannter Weise kann der Drucksensor 15 das Auslösen eines Warnsignals und/oder das Außerbetriebsetzen des Stromabnehmers steuern.

Abweichend von der dargestellten Ausführungsform kann die galvanisch aufgebrachte Kupferschicht 5 auch die Wandungen der Nut 9 bedecken. Auch in diesem Fall bleiben die Vorteile der Erfindung gewahrt, da bei Abnützung oder Bruch der Kohle auch die dünne Kupferschicht sofort beschädigt und undicht wird.

Die Kohleleiste 1 mit dem Druckkanal 9 kann in vorteilhafter Weise durch folgendes Verfahren hergestellt werden: In die Bodenfläche der Kohleleiste 1 wird die Nut 9 eingearbeitet. Anschließend wird die Nut 9 mit einem Füllmaterial bündig mit der Bodenfläche der Kohleleiste 1 ausgefüllt. Als Füllmaterial kommt insbesondere ein Kunststoffmaterial in Frage, z.B. ein in die Nut 9 eingelegter Kunststoffstreifen. Anschließend wird die Bodenfläche der Kohleleiste 1 galvanisch mit der Kupferschicht 5 versehen, wobei diese auch über das in der Nut 9 befindliche Füllmaterial wächst und dieses überbrückt. Vorteilhaft ist die Wahl eines Füllmaterials, an welchem die Kupferschicht schlecht haftet. Nach der Verkupferung wird das Kunststoffprofil od.dgl. Füllmaterial entfernt, z.B. aus der Nut 9 herausgezogen oder geschmolzen. Der so entstehende Druckkanal 9 ist allseits luftdicht umschlossen.

Gemäß einer angeänderten Ausführungsform der Erfindung kann die Kupferschicht 5 auch so ausgebildet werden, daß sie nur beiderseits der Nut 9, und gegebenenfalls auch an den Innenwandungen der Nut 9, aufgebracht wird, aber die Nut 9 nicht überdeckt. Die Nut 9 bleibt in diesem Fall zum Träger 3 hin offen und wird erst beim luftdichten Aufkleben der Kohleleiste 1 auf den Träger 3 durch den Träger geschlossen. Diese abgeänderte Ausführungsform hat den Vorteil, daß der Detektor 15 auch dann anspricht, wenn sich die Klebverbindung zwischen der Kohleleiste 1 und dem Träger 3 an irgendeiner Stelle löst oder undicht wird.

Bei der Ausführungsform nach Fig. 3 ist der Träger 3 an jedem Ende mit einem abgebogenen Auflaufhorn 3a ausgebildet, welches dazu dient, einen von der Seite her einlaufenden Stromleitungsdraht auf den mittleren Bereich der Schleifleiste zu führen. Der mittlere Bereich des Trägers 3, der gerade oder nur sehr schwach gekrümmt ausgebildet ist, wird von der Kohleleiste 1 bedeckt, in welcher, wie zuvor beschrieben der Druckkanal 9 ausgebildet ist. Der Bereich jedes Auflaufhorns 3a ist ebenfalls mit einer Auflage 1a aus Kohlematerial versehen, die als Verschleißschutz dient. Jede Auflage 1a, die beträchtlicht dünner als die Kohleleiste 1 ausgebildet ist, kann vorzugsweise getrennt von der Kohleleiste 1 hergestellt und angebracht werden und ist in diesem Fall mit der Kohleleiste 1 durch eine Klebfuge 17 luftdicht verbunden. Auch in jeder Auflage 1a ist ein Druckkanal 9a aisgebildet, der mit dem Druckkanal 9 der Kohleleiste 1 durch ein eingesetztes, die Klebfuge 17 überbrückendes Schlauchstück 19 verbunden ist. Mit einem Anschlußnippel 12 kann der Druckkanal 9a der Auflage 1a, und damit auch der Druckkanal 9 der Kohleleiste 1, mit dem (nicht dargestellten) Druckluftbehälter und dem Drucksensor verbunden werden. Ein Anschlußteil 14 dient zur Befestigung der Schleifleiste z.B. am Pantographen eines Stromabnehmers sowie zur Herstellung der elektrischen Anschlüsse.

## Patentansprüche

1. Schleifleiste für Stromabnehmer mit einem Träger (3), einer darauf angebrachten Kohleleiste (1) und einer Bruchwächtereinrichtung zum Detektieren von Bruch oder Abnützung der Kohleleiste (1), bestehend aus einem sich in der Kohleleiste (1) in deren Längsrichtung erstreckenden luftdichten Druckkanal (9), einer Einrichtung zum Erzeugen eines erhöhten Luft- oder Gasdruckes in den Druckkanal (9) und einem einen Druckabfall signalisierenden Detektor (15), dadurch **gekennzeichnet**, daß der Druckkanal (9) von einer in der Unterseite der Kohleleiste (1) ausgebildeten Nut gebildet ist, daß die Kohleleiste (1) auf ihrer Unterseite eine Metallbeschichtung (5) aufweist, die die offene Seite der Nut überbrückt und verschließt, und daß auch die Wandungen der Nut mit einer Metallbeschichtung aus dem gleichen Metall versehen sind derart, daß die Wandung des Druckkanals (9) von der Metallbeschichtung gebildet ist.

2. Schleifleiste nach Anspruch 1, dadurch **gekennzeichnet**, daß der Träger (3) an seinen Enden abgebogene oder abgewinkelte Auflaufhörner (3a) aufweist, daß die Hörner mit Auflagen (1a) aus Kohlematerial versehen sind, und daß jeder der Auflagen (1a) einen an die Bruchwächtereinrichtung angeschlossenen Druckkanal (9a) aufweist, dessen Wandung mindestens teilweise vom ggf. beschichteten Material der Auflage (1a) gebildet wird.

3. Schleifleiste nach Anspruch 1, dadurch **gekennzeichnet**, daß die Auflagen (1a) aus von der Kohleleiste (1) getrennten Kohlestücken bestehen und daß der Druckkanal (9a) jeder Auflage (1a) mit dem (9) der Kohleleiste (1) durch ein Kupplungsschlauchstück (19) verbunden ist.

4. Verfahren zum Herstellen einer Kohleleiste für eine Schleifleiste nach Anspruch 1 , dadurch **gekennzeichnet**, daß in die Bodenfläche der Kohleleiste (1) eine Nut (9) eingearbeitet wird, die Innenflächen der Nut mit einer dünnen Metallbeschichtung (5) versehen werden, dann die Nut mit einem Füllmaterial bündig mit der Bodenfläche ausgefüllt, auf die Bodenfläche einschließlich des Füllmaterials eine Metallschicht aufgebracht und schließlich das Füllmaterial entfernt, insbesondere in Längsrichtung der Nut herausgezogen oder geschmolzen wird.

## Claims

1. A contact strip for current collectors with a support (3), a carbon strip (1) mounted thereon and a rupture control device for detecting the rupture or wear of the carbon strip (1), comprising an airtight pressure channel (9) extending in the carbon strip (1) in the longitudinal direction thereof, a device for producing an increased air or gas pressure in the pressure channel (9) and a detector (15) signalling a pressure drop, characterised in that the pressure channel (9) is formed by a groove provided in the underside of the carbon strip (1), in that on its underside the carbon strip (1) has a metal coating (5) which spans and seals the open side of the groove, and that the walls of the groove are also provided with a metal coating of the same metal in such a way that the wall of the pressure channel (9) is formed by the metal coating.

2. A contact strip according to Claim 1, characterised in that at its ends the support (3) has curved or bent leading horns (3a), in that the horns are provided with seatings (1a) of carbon material, and in that each of the seatings (1a) has a pressure channel (9a) which is connected to the rupture control device and the wall of which is formed at least partly by optionally coated material of the bearing surface (1a).

3. A contact strip according to Claim 1, characterised in that the seatings (1a) consist of carbon pieces separated from the carbon strip (1) and in that the pressure channel (9a) of each bearing surface (1a) is connected with the pressure channel (9) of the carbon strip (1) by a coupling hose portion (19).

4. A method of producing a carbon strip for a contact strip according to Claim 1, characterised in that a groove (9) is incorporated in the bottom surface of the carbon strip (1), the inner surfaces of the groove are provided with a thin metal coating (5), then the groove is filled with a filling material flush with the bottom surface, a metal layer is applied to the bottom surface including the filling material and, finally, the filling material is removed, in particular is extracted or melted in the longitudinal direction of the groove.

## Revendications

1. Archet pour pantographe, comprenant un support (3), une semelle de charbon (1) montée sur celui-ci et un dispositif de contrôle de rupture pour la détection d'une rupture ou d'une usure de la semelle de charbon (1), se composant d'un canal de pression (9) étanche à l'air, qui s'étend dans la semelle de charbon (1) dans la direction longitudinale de celle-ci, d'un dispositif pour créer une pression élevée d'air ou de gaz dans le canal de pression (9) et d'un détecteur (15) qui signale une baisse de pression, caractérisé en ce que le canal de pression (9) est constitué par une rainure formée dans la face inférieure de la semelle de charbon (1), en ce que la semelle de charbon (1) présente, sur sa face inférieure, un revêtement de métal (5) qui passe en pont sur le côté ouvert de la rainure et ferme celle-ci, et en ce que les parois de la rainure sont également garnies d'un revêtement métallique du même métal, de telle sorte que la paroi du canal de pression (9) soit constituée par le revêtement métallique.

2. Archet selon la revendication 1, caractérisé en ce que le support (3) présente, à ses extrémités, des cornes d'archet courbées ou coudées (3a), en ce que les cornes sont garnies de couches (1a) en matière du type charbon, et en ce que chacune des couches (1a) comporte un canal de pression (9a) qui est relié au dispositif de contrôle de rupture et dont la paroi est formée, au moins en partie, du matériau de la couche (1a), éventuellement revêtu.

3. Archet selon la revendication 1, caractérisé en ce que les couches (1a) sont constituées par des pièces de charbon séparées de la semelle de charbon (1), et en ce que le canal de pression (9a) de la couche (1a) est mis en communication avec celui (9) de la semelle de charbon (1) par un morceau de tuyau flexible d'accouplement (19).

4. Procédé de fabrication d'une semelle de charbon pour pantographe selon la revendication 1, caractérisé en ce qu'une rainure (9) est creusée dans la surface inférieure de la semelle de charbon (1), les surfaces intérieures de la rainure sont garnies d'un revêtement métallique mince (5), puis la rainure est comblée avec une matière de remplissage à fleur de la surface inférieure, une couche métallique est appliquée sur la surface inférieure, y compris la matière de remplissage, et enfin la matière de remplissage est enlevée, en particulier par extraction dans la direction longitudinale de la rainure ou par fusion.
